# EUROPÄISCHE PATENTANMELDUNG

(11) **EP 0 985 926 A2**
(43) Veröffentlichungstag der Anmeldung: **15.03.2000**
(21) Anmeldenummer: 99250320.1
(22) Anmeldetag: 10.09.1999
(51) Int. Cl.: G01N 23/207

(54) **Verfahren und Gerät zum Analysieren von Proben mittels Röntgenfluoreszenz-Spektroskopie**

(30) Priorität: 10.09.1998 DE 19843229
(71) Anmelder: IFG INSTITUT FÜR GERÄTEBAU GmbH, 12489 Berlin (DE)
(72) Erfinder: Langhoff, Norbert, Prof. Dr., 12526 Berlin (DE); Schmalz, Jürgen, Dipl.-Ing., 15556 Schöneiche (DE)
(74) Vertreter: Hengelhaupt, Jürgen, Dipl.-Ing.

(57) **Zusammenfassung**

Die Erfindung betrifft ein Verfahren und ein mobiles Gerät zum Analysieren von Proben mittels Röntgenfluoreszenz-Spektroskopie, insbesondere unter Verwendung eines Detektors.

Die Aufgabe der Erfindung, ein Verfahren und ein Gerät der eingangs genannten Gattung zu entwickeln, mit denen gewährleistet wird, daß die Anregungsquelle und der Detektor in Bezug auf den zu analysierenden Ort optimal positionierbar sind, wird dadurch gelöst, daß die zur Markierung des Meßortes auf der Probe benutzten Lichtpunkte durch die Bewegung eines flexiblen Leitstranges, auf den mindestens ein Detektor aufgebracht ist, miteinander zur Deckung gebracht werden, wobei der eine Lichtpunkt über innerhalb des flexiblen Leitstranges befindliche Lichtleiter und der andere Lichtpunkt aus der Röntgenoptik mit der Anregungsquelle auf den Meßort projiziert werden.

## Beschreibung

Die Erfindung betrifft ein Verfahren und ein Gerät zum Analysieren von Proben mittels Röntgenfluoreszenz-Spektroskopie gemäß den Oberbegriffen der Ansprüche 1 und 3.

Die Röntgenfluoreszenz-Spektroskopie hat sich als physikalische Analysenmethode zur Stoffbestimmung fest etabliert.

Durch neue technische Entwicklungen bei Röntgenquellen, röntgenoptischen Systemen und Detektoren gelingt es zunehmend, Gerätekonzepte zu entwickeln, die den Einsatz der Methode außerhalb des Labors, zum Beispiel in technologischen Prozessen, im Umweltbereich, bei Werkstoffrecycling, in Museen, in der Archäologie, der Geologie, dem Bergbau, in der Kriminalistik und anderen Bereichen gestattet. Besondere Anforderungen werden dabei an die Mobilität und die Anpassungs-fähigkeit des Gerätes an unterschiedliche Meßaufgaben gestellt.

So ist es z.B. in Museen unerläßlich, bei sehr kostbaren Kunstgegenständen zerstörungsfrei vor Ort Analysen mit hoher Empfindlichkeit und Zuverlässigkeit auszuführen. Die zu untersuchenden Objekte gestatten es in der Regel auch nicht, die zu untersuchenden Objekte in ein Labor zu bringen oder eine Präparation der Meßstelle vorzunehmen.

Mit der Entwicklung des Driftkammer-Halbleiterdetektors "X-Flash-Detektor" (Firma RÖNTEC GmbH, 12439 Berlin) entsprechend der DE 195 46 142 steht ein Bauelement zur Verfügung, das eine hohe Energieauflösung und damit Elementselektivität bei Peltier-Kühlung zu erreichen gestattet.

In gleicher Weise gibt es Fortschritte beim Einsatz von peltiergekühlten PIN-Dioden als Detektoren. Deren Parameter sind schlechter als die der Driftkammer-Halbleiterdetektoren, dafür sind sie aber billiger.

Die bekannten Geräte weisen in der Regel eine feste geometrische Zuordnung von Anregungsquelle, Detektor und dem Meßort auf. Durch diese feste Zuordnung wird der optimale Abstand zwischen dem Austrittskollimator der Quelle, dem Detektor und der zu analysierenden Stelle bestimmt. Vor allem die Kompaktheit kann in Fällen unregelmäßiger Oberflächenprofile zu Problemen führen.

Der Erfindung liegt daher die Aufgabe zugrunde, ein Verfahren und ein Gerät der eingangs genannten Gattung zu entwickeln, mit denen gewährleistet wird, daß Anregungsquelle und Detektor in Bezug auf den zu analysierenden Ort auch an schlecht zugänglichen Meßorten optimal positionierbar sind.

Erfindungsgemäß wird diese Aufgabe durch die in den Ansprüchen 1 und 3 angegebenen Merkmale gelöst. Nach dem erfindungsgemäßen Verfahren werden die zur Markierung benutzten Lichtpunkte durch die Bewegung des flexiblen Leitstrangs mit dem mindestens einen Detektor miteinander zur Deckung gebracht, wobei der eine Lichtpunkt aus dem flexiblen Leitstrang über innerhalb des flexiblen Leitstrangs befindliche Lichtleiter auf den Meßort und der andere Lichtpunkt aus der Anregungsquelle mit dem Kollokator auf den Meßort projiziert wird.

Das mobile Gerät nach der Erfindung weist mindestens einen Detektor auf einem flexiblen, als Leitstrang ausgebildeten Träger, welcher wie ein Schwanenhals gestaltet ist, auf. Dadurch können die Anregungsquelle und der Detektor in Bezug auf die Probenoberfläche voneinander unabhängig optimal positioniert werden. Durch die Variation des Abstandes zwischen dem Kollimatorausgang, also dem Ausgang der Röntgenoptik und der Probenoberfläche kann die Größe der zu analysierenden Fläche eingestellt und danach der Detektor in seiner Position daran angepaßt werden.

Vorteilhafte Weiterbildungen der Erfindung ergeben sich aus den Unteransprüchen.

Die Erfindung soll nachstehend an einem Ausführungsbeispiel eines mobilen Gerätes näher erläutert werden. In der dazugehörigen Zeichnung zeigen:
- Fig. 1:: die schematische Darstellung eines Röntgenfluoreszenz-Spektrometers nach der Erfindung;

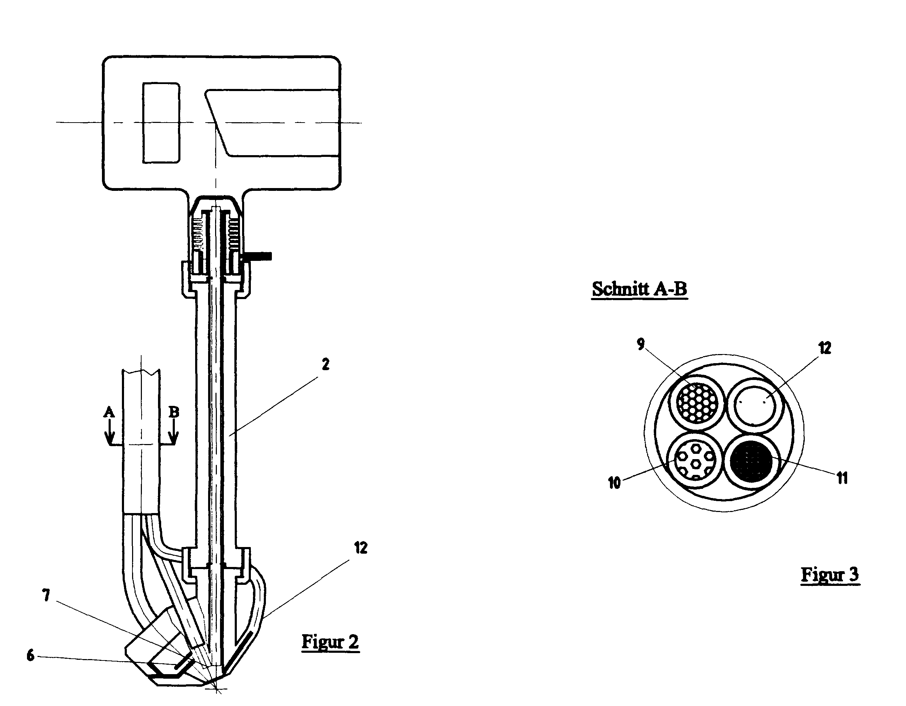

- Fig. 2:: Anregungsquelle mit Röntgenoptik und Meßkopf;
- Fig. 3:: den Schnitt A-B durch den flexiblen Leitstrang gemäß der Fig. 1.

Das Spektrometer nach der Erfindung ist mobil aufgebaut und ist insbesondere für die Analyse von Kunstgegenständen wie Gemälde, Skulpturen vorgesehen, wobei eine Anregungsquelle 1 mit einer Röntgenoptik 2 auf die zu analysierende Fläche eines Gegenstandes (Probe, Gemälde) gerichtet wird und diese Strahlung als Fluoreszenzstrahlung über mindestens einen Detektor empfangen und über eine Verarbeitungseinrichtung ausgewertet wird.

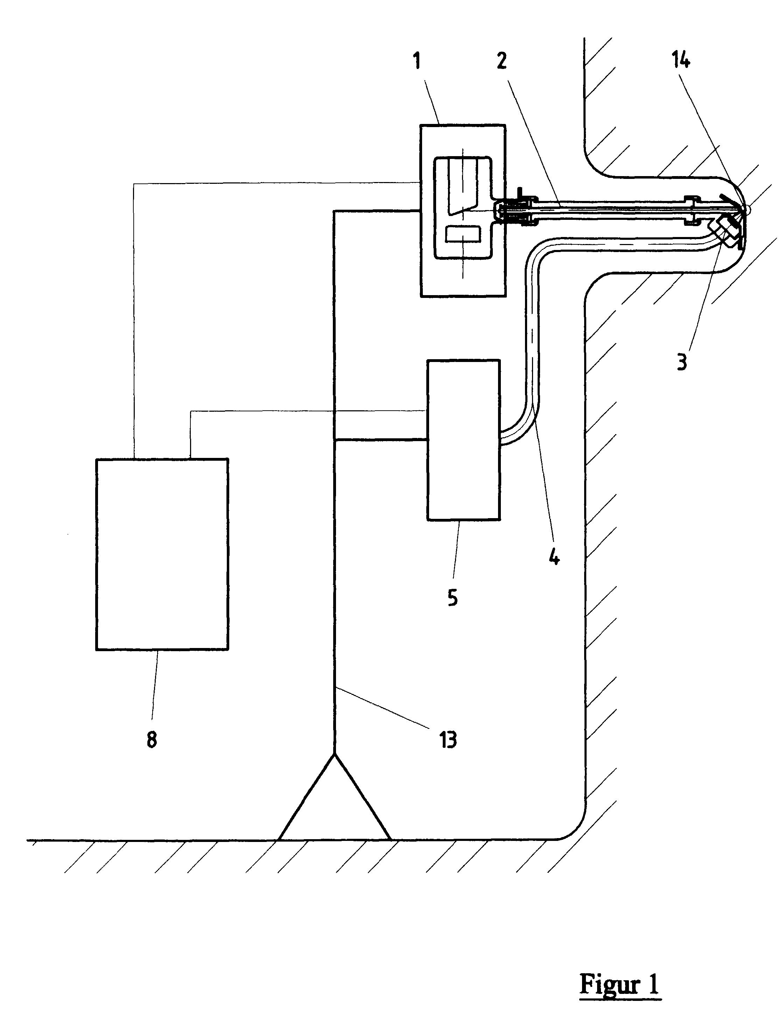

Entsprechend der Darstellung in der Fig. 1 besteht das Röntgenfluoreszenz-Spektrometer nach der Erfindung im wesentlichen aus einer Anregungsquelle 1, an deren Ausgang eine als Kollimator wirkende Röntgenoptik 2 angeordnet ist, aus einem Detektorblock 5, in dem nicht dargestellt ein Vorverstärker, ein zweites Peltierelement und eine Stromversorgung eingebracht sind, und an dessen Ausgang ein flexibler Leitstrang 4 in Form eines Schwanenhalses mit einem Meßkopf 3, insbesondere einem Driftkammer-Halbleiterdetektor, der ebenfalls ein Peltierelement aufweist, angeordnet ist, aus einer Meßvorrichtung 8 in Form eines Meßkoffers, in dem nicht dargestellt ein Rechner (z.B. ein Laptop), Signalelektronik, Akkus, Netzteile enthalten sind, und aus einem Stativ 13, an dem die Anregungsquelle 1 mit der Röntgenoptik 2 und der Meßkopf 3 mit dem Leitstrang 4 und dem Detektor befestigt sind.

Als Detektor können auch andere Halbleiter-Detektoren wie PIN-Dioden eingesetzt sein.

Als Anregungsquelle 1 können sowohl Röntgenröhren, vorwiegend Kleinleistungs-Röntgenröhren, als auch Nuklidquellen zur Anwendung kommen. Im ersteren Fall gestalten sich das Handling und die Entsorgung entschieden einfacher, so daß dieser Lösung generell der Vorzug zu geben ist.

Als Röntgenoptik 2 können Röntgenlichtleiter in Form von Glaskapillaroptiken verwendet werden. Mit Hilfe von Glaskapillaren erreicht man höhere Intensitäten (geringere Intensitätsverluste). Es können damit auch sehr kleine Bereiche analysiert werden (10µm).

Es können sowohl ein einziger Detektor als auch ein Detektor-Array als Empfänger vorgesehen sein.

Der vorzugsweise eingesetzte Driftkammer-Halbleiterdetektor besteht im wesentlichen aus einem Strahlungssensor in Form eines Silizium-Chips mit einer kreisförmigen, nach dem Driftkammer-Prinzip arbeitenden Struktur und mit einer on-chip Elektronik. Der Silizium-Chip ist auf eine Keramik-Hybrid-Baugruppe montiert, die neben der mechanischen Halterung und elektrischen Kontaktierung des Chips die Schnittstelle für die Kontaktierung aller Signal- und Versorgungsanschlüsse realisiert. Die Keramik-Hybrid-Baugruppe ist mit einem Peltier-Element versehen.

In das aktive Volumen des Sensors einfallende Röntgenquanten erzeugen eine ihrer Energie proportionale Anzahl von Elektronen-Loch-Paaren. Durch das angelegte Potentialfeld werden die Ladungsträger nach dem Driftkammerprinzip an die Elektroden abgeführt, an der Ausleseanode entsteht ein Ladungsimpuls. Im integrierten Feldeffekt-Transistor wird dieser in einen Spannungsimpuls umgewandelt und im Vorverstärker verstärkt. Im spektroskopischen Verstärker erfolgt die Formung in gaußförmige Impulse entsprechender Höhe und die weitere Verstärkung. Diese werden digitalisiert und in der Spektren-Eingabekarte akkumuliert. Dies geschieht in der Weise, daß die Impulse in Abhängigkeit von der Impulshöhe - und damit von der Energie des Röntgenquants - in diskrete Kanäle eingeordnet werden. Somit entsteht ein Röntgen-Spektrum, in dem in bestimmten Kanälen eine Häufung von Ereignissen zu verzeichnen ist. Mit Hilfe der analytischen Software kann aus der energetischen Lage dieser Häufungen das chemische Element bestimmt werden, das die entsprechende Strahlung emittiert sowie aus der Intensität die Konzentration des Elementes.

Um die Anregungsquelle 1 und den am Meßkopf befindlichen Detektor unabhängig voneinander in Bezug auf die zu analysierende Fläche bzw. den Meßort 14 optimal zu positionieren, ist der Detektor auf den flexiblen Leitstrang 4 montiert. Der Meßort 14 auf der Probe wird durch einen Lichtpunkt markiert, die Übertragung von der Lichtquelle erfolgt innerhalb des Leitstrangs 4 mittels eines flexiblen Lichtleiters 11 (Fig. 3). Zur Abführung von Wärme von der warmen Seite des Peltier-Elementes am Detektor enthält der Leitstrang 4 eine Cu-Litze 9 (Wärmeleiter) mit einem hinreichend großen Querschnitt. Die Justage der Quelle 1 mit der Röntgenoptik 2 und des Detektors erfolgt in der Weise, daß die zur Markierung benutzten Lichtpunkte miteinander zur Deckung gebracht werden. Dabei wird der Lichtpunkt aus der Quelle 1 und der Röntgenoptik 2 auf die zu untersuchende Fläche der Probe, z.B. ein Gemälde, gerichtet. Der Lichtpunkt aus dem flexiblen Leitstrang 4 wird mit dem Lichtpunkt aus der Röntgenoptik 2 in Deckung gebracht, indem der flexible Leitstrang entsprechend bewegt wird. Durch eine Variation des Abstandes zwischen dem Röntgenoptik-Ausgang und der Fläche der Probe kann die Größe der Fläche der zu analysierenden Probe verändert werden. Generell ist im Interesse geringer Intensitätsverluste anzustreben, die Abstände zwischen dem Ausgang der Röntgenoptik 2 der Quelle 1, der Oberfläche der Probe und dem Detektor möglichst klein zu halten.

Es ist prinzipiell auch denkbar, die Quelle 1 mit der Röntgenoptik 2 oder auch beide Baugruppen, die Quelle 1 mit der Röntgenoptik 2 und den Detektor, beweglich zu gestalten.

Der Abstand des Meßortes 14 auf der Probe zur Anregungsquelle 1 kann durch den Austausch der zwischen Röntgenquelle und Meßort eingefügten Röntgenoptik 2 verändert werden, wobei die Verbindung zwischen Meßkopf 3 und Detektorblock 5 durch einen flexiblen Leitstrang 4 realisiert ist, wobei der genaue Abstand des Detektors zum Meßort 14 eingestellt wird, indem ein Lichtpunkt aus dem Kollimator der Röntgenoptik 2 mit einem Lichtpunkt eines über den flexiblen Leitstrang 4 zum Meßkopf 3 geführten Lichtleiters 11 in Übereinstimmung gebracht wird. Zum Nachweis leichter Elemente wird das Volumen zwischen Meßort 14 und Detektor 6 mit Helium gespült. Zur Kalibrierung der spektroskopischen Messungen wird eine Eichprobe, z.B. in Form einer spektroskopisch exakt beschriebenen Folie in den anregenden Röntgenstrahl geschwenkt und mit Hilfe des Detektors das Spektrum und die Intensität gemessen.

Der Meßkopf 3, der die Position des Detektors zum Anregungspunkt auf der Probenoberfläche, welcher durch die Richtung der Röntgenoptik festgelgt ist, gewährleistet, und die Beobachtungsoptik 7 sowie Meßortbleuchtung und -markierung 14 enthält, ist mit einem flexiblen Träger, gestaltet wie ein Schwanenhals, mit dem Detektorblock 5 verbunden.

Im flexiblen Leitstrang 4 sind ein Wärmeleiter 9, die Versorgungs- und Signalleitungen 10, Lichtleiter 11 und ein Heliumschlauch 12 angeordnet. Über die Röntgenoptik 2 als auch über einen Lichtleiter werdem Lichtpunkte auf die Probenfläche projeziert, die am Meßort 14 in Übereinstimmung zu bringen sind. Der Abstand zwischen Röntgenquelle 1 und Meßort 14 kann entsprechend der Erfordernisse des Meßobjektes sowie der Größe des Anregungsbereiches verändert werden, indem die Röntgenoptik 2 in Form eines Anregungsstrahls in einfacher Weise ausgetauscht wird, wobei die exakte Zuordnung von Meßort 14, Detektor 6 und Beobachtungsund Markierungseinrichtung 7 zu gewährleisten ist. Der Meßkopf 3 wird mit Helium gespült.

Wie auch bei anderen physikalischen Analysenmethoden ist die Röntgenfluoreszenzanalyse ein Verfahren, das für die quantitative Elementbestimmung auf Vergleichsstandards angewiesen ist. Es werden auch standardfreie Verfahren für die quantitative Analyse angeboten. Sie beschränken sich aber fast ausschließlich auf die elektroneninduzierte Röntgenfluoreszenzanalyse.

Es kann für spezielle Analysen, insbesondere von Gemälden, zweckmäßig sein, den zu untersuchenden Gegenstand am Analysenort mit einer sehr dünnen Folie, die eine bekannte Standardprobe trägt, abzudecken. Dadurch werden eine Beschädigung der Probe ausgeschlossen und eine unzulässige Schwächung des anregenden Photonenstrahls bzw. der zu messenden Fluoreszenzstrahlung vermieden. Der Anwender des Gerätes kann ein breites Spektrum von Standardproben für unterschiedliche Analysenprobleme einsetzen.

Die Erfindung ist nicht auf das hier beschriebene Ausführungsbeispiele beschränkt. Vielmehr ist es möglich, durch Kombination und Modifikation der beschriebenen Merkmale weitere Ausführungsvarianten zu realisieren, ohne den Rahmen der Erfindung zu verlassen.

### Bezugszeichenliste

- 1: Anregungsquelle
- 2: Röntgenoptik
- 3: Meßkopf
- 4: Flexibler Leitstrang mit Detektor
- 5: Detektorblock
- 6: Detektor
- 7: Beobachtungseinrichtung/Lichtquelle
- 8: Meßeinrichtung
- 9: Wärmeleiter
- 10: Versorgungs- und Signalleitungen
- 11: Lichtleiter
- 12: Heliumleitung
- 13: Stativ
- 14: Meßort

## Patentansprüche

1. Verfahren zum Analysieren von Proben mittels Röntgenfluoreszenz-Spektroskopie, insbesondere unter Verwendung eines Detektors,
**dadurch gekennzeichnet,** daß
die zur Markierung des Meßortes (7) auf der Probe (6) benutzten Lichtpunkte durch die Bewegung eines flexiblen Trägers (4), auf den mindestens ein Detektor (12) aufgebracht ist, miteinander zur Deckung gebracht werden, wobei der eine Lichtpunkt über innerhalb des flexiblen Trägers (4) befindliche Lichtleiter (11) und der andere Lichtpunkt aus dem Kollimator (2) mit der Anregungsquelle (1) auf den Meßort (7) projiziert werden.

2. Verfahren nach Anspruch 1, dadurch gekennzeichnet, daß mindestens ein Driftkammer-Halbleiterdetektor (12) oder mindestens eine PIN-Diode (12) verwendet werden.

3. Mobiles Gerät zur Röntgenfluoreszenzanalyse (Röntgenfluoreszenz-Spektrometer), bestehend aus einer Anregungsquelle, einem Austrittskollimator, einem Detektor,
**dadurch gekennzeichnet,**
daß der Detektor (12) auf einen flexiblen Träger (4) wie Schwanenhals montiert ist.

4. Mobiles Gerät nach Anspruch 3,
dadurch gekennzeichnet, daß im flexiblen Träger (4) Wärmeleiter (9), Versorgungs- und Signalleitungen (10) und Lichtleiter (11) angeordnet sind.

5. Mobiles Gerät nach den Ansprüchen 3 und 4,
dadurch gekennzeichnet, daß die Anregungsquelle (1) mit dem Kollimator (2) und der Detektorblock (3), bestehend aus Vorverstärker, zweiter Peltierstufe, Stromversorgung, mit dem damit verbundenen flexiblen Träger (4) mit dem mindestens einen Detektor (12) auf ein Stativ (5) montiert sind, wobei die Anregungsquelle (1) und der Detektorblock (3) Schnittstellen zum Anschluß einer Meßvorrichtung (8) aufweisen.

6. Mobiles Gerät nach den Ansprüchen 3 bis 5, dadurch gekennzeichnet, daß der mindestens eine Detektor (12) ein Driftkammer-Halbleiterdetektor oder eine PIN-Diode ist.
